**Europäisches Patentamt**

**European Patent Office**

**Office européen des brevets**

(19)

(11) Veröffentlichungsnummer: **0 014 862**
**B1**

(12) **EUROPÄISCHE PATENTSCHRIFT**

(45) Veröffentlichungstag der Patentschrift:
**23.02.83**

(51) Int. Cl.³: **G 01 B 7/14,** B 22 D 11/16

(21) Anmeldenummer: **80100415.1**

(22) Anmeldetag: **28.01.80**

(54) **Vorrichtung zum Ausmessen einer Strangführung.**

(30) Priorität: **30.01.79 CH 883/79**

(43) Veröffentlichungstag der Anmeldung:
**03.09.80 Patentblatt 80/18**

(45) Bekanntmachung des Hinweises auf die Patenterteilung:
**23.02.83 Patentblatt 83/8**

(84) Benannte Vertragsstaaten:
**AT BE DE FR GB IT LU NL SE**

(56) Entgegenhaltungen:
**keine**

(73) Patentinhaber: **CONCAST HOLDING AG, Tödistrasse 7, CH-8027 Zürich (CH)**

(72) Erfinder: **Gloor, Hans, Sandbockstrasse 19, CH-5222 Umiken (CH)**

(74) Vertreter: **Fiala, Ferdinand et al, CONCAST HOLDING AG Tödistrasse 7, CH-8027 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Vorrichtung zum Ausmessen einer Strangführung

Die Erfindung betrifft ein Messgerät zum Ausmessen der Rollenabstände eines Rollenpaares einer aus mindestens einem Paar von Stütz- und Ausziehrollen bestehenden Strangführung einer Stranggiessanlage, bestehend aus einer Messeinrichtung mit Messfühlern und einer Recheneinrichtung mit Speicher.

Zum Betrieb von Stranggiessanlagen ist die genaue Einstellung der Strangführungsbahnen, gegeben durch z.B. gegenüberliegenden Rollenreihen wichtig, da sonst Schäden am gegossenen Strang auftreten. Daher werden in bestimmten zeitlichen Abständen die Distanzen gegenüberliegender Rollen ausgemessen und gegebenenfalls korrigiert.

Neben der manuellen Ausmessung mittels einer Mikrometer-Schraube sind Verfahren und Vorrichtungen bekannt, die Rollenführung einer Stranggiessanlage mittels eines Messkopfes, der beispielsweise an einem Anfahrstrang befestigt ist und damit durch die Strangführung gezogen wird, auszumessen. Der Messkopf ist dabei über ein Schleppkabel mit einem Anzeigeinstrument, das die entsprechenden Distanzen angibt, verbunden. Nachteilig dabei ist das Vorhandensein des Kabels, das zu Schwierigkeiten Anlass gibt. Einerseits bilden sich leicht Bruchstellen an den Kabeln, deren Länge bei Stranggiessanlagen mit grosser metallurgischer Länge beträchtlich ist, anderseits werden durch die notwendigen Schleifkontakte an den Kabelrollen die zur Übermittlung der elektirschen Signale dienen, oft Störungen verursacht. Um diese Schwierigkeiten zu umgehen, können die aufgenommenen Daten drahtlos durch Funk aus der Strangführung zu einem Empfänger übermittelt werden. Bei dieser Datenübermittlung treten jedoch durch die Abschirmwirkung der Stahlmasse der Stranggiessanlage Schwierigkeiten wegen einer Verfälschung der Signale auf. Diese Lösung ist aber auch aufwendig.

Die DE-AS 2 617 143 zeigt ein Messgerät zum Durchfahren einer Strangführung mittels eines der Biegung der Strangführung angepassten Messkopfes. Über die Art der Messwertverarbeitung werden dort allerdings keine Hinweise gegeben.

In der US-PS 3 882 606 wird ein Messverfahren mit Zwischenspeicherung der Daten direkt am Messkopf beschrieben, doch handelt es sich hier um das Vermessen von Rohren, also einen kontinuierlichen Vorgang, welcher zum Ausmessen von Rollenabständen, welche einer Reihe von diskontinuierlichen Messwerten entsprechen, nicht geeignet ist.

Es ist daher Aufgabe der Erfindung, eine Vorrichtung zu schaffen, die die vorgenannten Schwierigkeiten vermeidet und insbesondere erlaubt, auf einfache und wirtschaftliche Weise korrekte Angaben ohne Störungen zu erhalten. Auch sollte die Möglichkeit gegeben werden, die erhaltenen Signale mehrmals auszuwerten, um damit über den Zustand einer Stranggiessanlage über einen grösseren Zeitraum hinweg Angaben zu erhalten.

Diese Aufgabe wird erfindungsgemäss durch ein Messgerät der eingangs genannten Art gelöst, welches dadurch gekennzeichnet ist, dass die Recheneinrichtung mit dem Speicher in die Messeinrichtung integriert und mit dieser durch die Strangführung bewegbar ist, und dass die Recheneinrichtung derart ausgebildet ist, dass ein Erkennen eines Messwertes als ein von einem Rollenpaar kommendes Signal durchführbar ist.

Die erfindungsgemässe Vorrichtung wird insofern weiter ausgestaltet, als die Messeinrichtung einen Analog-Digital-Wandler, ein Mikroprozessorsystem mit Programm- und Datenspeicher sowie eine Schnittstelle aufweist.

Durch die Erfindung wird der Vorteil erreicht, dass Störungen, verursacht durch Schleppkabel oder durch die Abschirmwirkung der Stahlmasse, vermieden werden und ein exaktes Messergebnis erhalten wird. Das Mess-Signal über den gegenseitigen Abstand der Strangführungsbahnen, die z.B. durch zwei Reihen gegenüberliegender Stütz- und/oder Führungsrollen oder Rollen eines Treibrichtaggregates gebildet werden, kann mit einer üblichen Vorrichtung, z.B. mittels Fühlern in Form von induktiven Wegaufnehmern usw. erhalten werden. Dazu kann ein entsprechender Messwagen durch die Strangführung, beispielsweise mittels eines Anfahrstranges gezogen werden. Die Speicherung der ermittelten Daten, nach erfolgter Messung beim Durchfahren der Strangführung, kann auf bekannte Speicherelemente bzw. Datenträger, wie z.B. Magnetbänder, Kassetten oder dergleichen, erfolgen. Nach Durchfahrt durch die Strangführung können die Messdaten ausgelesen und ausgewertet bzw. dargestellt werden. Dazu dienen handelsübliche Kompensationsschreiber, Printer usw.

Weiter ergibt sich der Vorteil, dass die z.B. auf Magnetband gespeicherten Messwerte beliebig oft und in verschiedenster Form dargestellt werden können. Dies ist besonders wichtig für die Instandhaltung der Stranggiessanlagen, da auf diese Weise Veränderungen in der Geometrie der Strangführung über einen längeren Zeitraum gemerkt werden können. Bei Verwendung von Halbleiterspeichern sind die Messwerte unverändert bis zur nächsten Messfahrt vorhanden.

Die Erfindung wird anhand von Figuren, die ein Ausführungsbeispiel darstellen, erläutert.

Es zeigen:

Fig. 1 einen Teil einer Strangführung und eine Seitenansicht der Messeinrichtung,

Fig. 2 eine Ansicht der Messeinrichtung,

Fig. 3 ein vereinfachtes Blockschaltbild der Messeinrichtung.

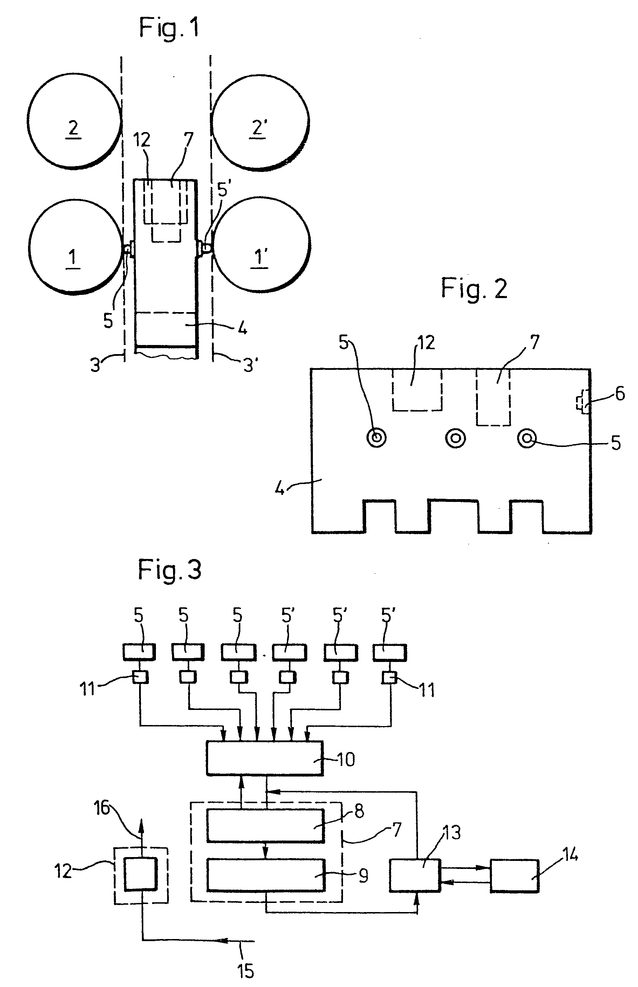

Gemäss den Fig. 1 und 2 bilden Rollen 1, 2 sowie gegenüberliegende Rollen 1', 2' Strangführungsbahnen 3 bzw. 3' für einen kontinuierlich gegossenen Stahlstrang. Diese Rollen können Bestandteil des Stütz- und Führungsgerüstes und/ oder eines Auszieh-Richtaggregates sein. Durch die gegenüberliegenden Rollen wird eine Messeinrichtung 4, die z.B. Teil eines Anfahrtstrangkopfes oder als Anfahrstrangketten-Glied ausgebildet sein kann, hindurchgeführt. Die den Rollen 1, 2 bzw. 1', 2' zugewandte Seite der Messeinrichtung 4 weist jeweils drei induktive Wegaufnehmer 5 bzw. 5' auf. Diese ermitteln beim Durchgang durch die gegenüberliegenden Rollen deren gegenseitigen Abstand bzw. den Abstand der Strangführungsbahnen 3 und 3' voneinander. Diese Messeinrichtung 4 weist ferner ein Mikroprozessorsystem 7 mit Programmspeicher 8 und Datenspeicher 9 auf. Die Stellungen der sechs induktiven Wegaufnehmer 5, 5' werden, gemäss Fig. 3 durch einen, an das Prozessorsystem angeschlossenen Analog-Digital-Wandler 10 erfasst, wobei die Umsetzung der Weginformationen auf den Systempegel in Anpassungsmodulen 11 vorgenommen wird. Der Wandler 10 arbeitet im Multiplexsystem, d.h. die induktiven Wegaufnehmer werden nicht gleichzeitig, sondern nacheinander abgefragt. Dabei ist die Abtastrate so hoch, dass die unterschiedlichen Abtastpunkte der einzelnen Wegaufnehmer zu keinen nennenswerten Wegdifferenzen führen. Die Differenzwegbestimmung für jedes Wegaufnehmerpaar 5, 5' wird im Prozessorsystem vorgenommen. Mit 6 ist eine elektrische Kabelverbindung bezeichnet.

Das Blockschaltbild gemäss Fig. 3 zeigt, dass die von den induktiven Wegaufnehmern 5, 5' erhaltenen Messwerte nach Umwandlung durch den Analog-Digital-Wandler 10 dem Mikroprozessorsystem 7 zugeleitet und dort direkt verarbeitet werden. Über eine serielle Schnittstelle 13 kann eine zweiseitige Verbindung zu einem Drucker 14 über die Kabelverbindung 6 hergestellt werden. Nach dem Durchlauf durch die Stranggiessanlage ist für jedes Rollenpaar der Abstand der zugehörigen Rollen zuerst abgespeichert. Nach Anschluss des Druckers 14 können die Messdaten in Tabellenform ausgedruckt werden.

Die Einrichtung weist eine eigene Stromversorgung mittels eines 12-V-Akkumulators 12 auf, der mit dem Ausgang 16 für die Dauer einer Messfahrt die Einrichtung mit Strom versorgt. In der Ruhepause (Lagerung oder Ausdrucken der Messergebnisse) wird der Akku über ein Netzteil mit einer Ladespannung 15 geladen. Die Stromaufnahme des Gerätes wird zu einem grossen Teil von den Anpassungsmodulen für die induktiven Wegaufnehmer bestimmt. Werden Module mit relativ geringer Stromaufnahme eingesetzt, so liegt der Stromverbrauch im Bereich um 1 A. Mit einer Akku-Kapazität von 6 Ah können dann Messfahrten bis zu einer Dauer von ca. 5 Stunden unternommen werden.

Die Programmierung des Prozessorsystems ermöglicht einerseits eine Rollenerkennung und liefert zudem ein Auswerteprogramm. Das Rollenerkennungsprogramm ermöglicht die Ausklammerung aller Abtastsignale während einer Messfahrt, die nicht von den auszumessenden Rollen herrühren. Da die Geschwindigkeit während einer Messfahrt nicht festgelegt werden sollte, wird die Abtastrate variabel gestaltet. Dadurch wird keine bestimmte Durchlaufgeschwindigkeit des Messgerätes erforderlich, allerdings darf sie sich während eines Durchlaufes nicht wesentlich ändern.

Das Auswerteprogramm liefert ein Protokoll über die jeweils letzte Messfahrt, wobei neben der Rollennummer die Ergebnisse für die drei Fühlerpaare ausgedruckt werden. Ferner können Datum und Versuchsfahrtnummer abgefragt werden. Bei Verwendung des Gerätes auf verschiedenen Stranggiessanlagen mit unterschiedlicher Rollenzahl kann die Walzenzahl über eine Druckereingabe im Speicher eingegeben werden. Ebenso können Minimaldistanzen eingegeben werden, wenn Anpressrollen erkannt werden sollten, die beispielsweise die Messeinrichtung fördern. Dabei rollen diese direkt auf dem Messkopf ab, wodurch ein unterer Grenzwert für die Rollendistanz unterschritten wird, so dass solche Rollen ausgeschlossen werden können.

**Patentansprüche**

1. Messgerät zum Ausmessen der Rollenabstände eines Rollenpaares einer aus mindestens einem Paar von Stütz- und Ausziehrollen bestehenden Strangführung einer Stranggiessanlage, bestehend aus einer Messeinrichtung mit Messfühlern und einer Recheneinrichtung mit Speicher, dadurch gekennzeichnet, dass die Recheneinrichtung (7) mit dem Speicher (8, 9) in die Messeinrichtung (4) integriert und mit dieser durch die Strangführung (3, 3') bewegbar ist und dass die Recheneinrichtung derart ausgebildet ist, dass ein Erkennen eines Messwertes als ein von einem Rollenpaar (1, 1'; 2, 2') kommendes Signal durchführbar ist.

2. Messgerät nach Anspruch 1, dadurch gekennzeichnet, dass die Recheneinrichtung (7) eine Schnittstelle (13) aufweist.

3. Messgerät nach Anspruch 1 oder 2, dadurch gekennzeichnet, dass die Recheneinrichtung (7) von einem Mikroprozessorsystem gebildet ist.

4. Messgerät nach Anspruch 3, dadurch gekennzeichnet, dass zwischen Mikroprozessorsystem (7) und Messfühler (5, 5') ein Analog-Digital-Wandler (10) geschaltet ist.

**Claims**

1. Measuring apparatus for measuring the gaps between a pair of rollers of a strand guide of a continuous-casting installation, which guide consists of at least one pair of back-up and withdrawal rollers, and the measuring apparatus consisting of a measuring device with measuring sensors and a computer means with a store, characterized in that the computer means (7) with the store (8, 9) is integrated in the measuring device (4) and is movable with the latter through the strand guide (3, 3'), and in that the computer means is so designed that a measured value can be recognized as a signal derived from a pair of rollers (1, 1'; 2, 2').

2. Measuring apparatus according to claim 1, characterized in that the computer means (7) has an intersection point (13).

3. Measuring apparatus according to claim 1 or 2, characterized in that the computer means (7) is formed by a micro-processor system.

4. Measuring apparatus according to claim 3, characterized in that an analog-digital converter (10) is connected between the micro-processor system (7) and the measuring sensors (5, 5').

**Revendications**

1. Appareil de mesure pour relever les écartements des rouleaux d'une paire de rouleaux faisant partie d'un guide-barre à au moins une paire de rouleaux d'appui et d'extraction d'une installation de coulée continue, appareil qui comporte un dispositif de mesure avec des capteurs de mesure et un calculateur à mémoire, caractérisé en ce que le calculateur (7) à mémoire (8, 9) est intégré dans le dispositif de mesure (4) et est déplaçable avec lui à travers le guide-barre (3, 3') et que le calculateur est conçu de manière qu'une cote relevée puisse être reçue sous la forme d'un signal venant d'une paire de rouleaux (1, 1'; 2, 2').

2. Appareil de mesure selon la revendication 1, caractérisé en ce que le calculateur (7) présente une interface (13).

3. Appareil de mesure selon la revendication 1 ou 2, caractérisé en ce que le calculateur (7) est formé par un système à microprocesseur.

4. Appareil de mesure selon la revendication 3, caractérisé par l'interposition d'un convertisseur analogique/numérique (10) entre le système à microprocesseur (7) et les capteurs de mesure (5, 5').

Fig.1

Fig. 2

Fig.3